# EUROPEAN PATENT SPECIFICATION

(11) **EP 1 956 164 B1**
(45) Date of publication and mention of the grant of the patent: **17.06.2015**
(21) Application number: 08101418.5
(22) Date of filing: 08.02.2008
(51) Int. Cl.: E04H 17/16, B23Q 11/08, F16P 1/02, F16P 1/00

(54) **Safety barrier for machinery**
Sicherheitssperre für eine Maschine
Barrière de sécurité pour machines

(30) Priority: 09.02.2007 DK 200700216
(43) Date of publication of application: 13.08.2008
(73) Proprietor: NTF Aalborg A/S, 9530 Stovring (DK)
(72) Inventor: Moust, Thomas, 9520 Skørping (DK); Søndergaard, Thomas, 9530 Støvring (DK)
(74) Representative: Tellefsen, Jens J.

(56) References cited:
- EP-A1- 1 035 275
- FR-A1- 2 714 451
- JP-U- 3 111 919
- US-A- 5 730 426
- US-A1- 2003 209 701

## Description

### Field of the Invention

The present invention relates to a barrier, in particular a safety barrier for machinery such as robots working under strict hygienic requirements, for example in the fresh food industry.

### Background of the Invention

It is a general trend that more and more tasks are automated by bringing in robots and other machinery in order to perform these tasks that were previously carried out by manual labour.

When introducing machinery in environments where also personnel have to operate, the authorities generally require that a barrier is created between the machinery and the areas where personnel are allowed. At the same time the barrier needs to be flexible so that should the machinery break down, access may be gained to the machinery in order to repair, clean and maintain such machinery.

For these purposes a number of different suggestions have been presented on how to erect barriers around machinery.

A special problem occurs in the food processing industry where an extremely high level of hygiene is required. At the same time more and more tasks, for example in slaughterhouses and abattoirs, are carried out by robots, so that the amount of manual labour has diminished. The robots, however, require a substantial, free room in which to operate so that the arms of the robot or other tool holders may move freely in order to carry out the manual tasks thereby being able turn for example meat which needs to be worked on completely freely in order to carry out the most appropriate cutting process for that particular robot.

In order to protect personnel working in the vicinity of machinery, certain requirements are applied to the barrier. For example according to Danish law the requirements to the apertures allowed are such that they may not have a size large enough for a hand to penetrate the barrier, and the free space below the barrier may not allow a three year old to crawl under or a broom to accidentally enter the space behind the barrier.

An example of such an arrangement is disclosed in EP 1 035 275. The arrangement is made up of a number of vertical posts, which are maintained at a distance by horizontal beams. The beams provide stability to the barrier by being rigidly connected to the vertical posts, and at the same time screens in the shape of steel netting is attached to the beams such that a safety barrier is created.

In addition to protecting personnel from being entangled or otherwise come into contact with the machinery, the fresh food industry also requires an extremely high degree of hygiene, which in turn puts requirements on the machine designers to design the machines in such a way that they may be thoroughly cleaned in an easy and economically feasible way, whereby cleaning to such an extent that contamination of the food stuff being processed is completely and securely avoided. The same is therefore naturally true for the barrier. The normal way of cleaning these machines and apparatuses is by steam cleaning with high pressure jets or first covering machines and barriers by a soap layer and thereafter washing soap and debris away, for example by steam cleaning with high pressure jets.

This cleaning process is very effective for large flat surfaces where the polluting foodstuff particles and other residue easily may be cleaned away, but where narrow connections of bolts, welds etc. are present, it becomes more difficult to safely remove all matter so that the risk of contamination is completely removed.

In the art, as for example disclosed in EP 1 035 275, as mentioned above, the horizontal beams as well as the connection between the horizontal beams and the screens and further the free extending ends of the rod ends of the screens towards the vertical posts create traps in which debris, moisture and bacteria may flourish, and thereby create unhygienic conditions. Furthermore these spaces requires very careful and thorough cleaning in order to avoid build-up of debris, bacteria etc.

The document US 2003/209701 discloses a barrier which comprises the features of the preamble of the independent claim 1.

### Object of the Invention

It is therefore an object of the present invention to provide a barrier which both foresees the possibility of creating an effective barrier hindering personnel in accidentally coming into contact with for example a robot and at the same time provide the barrier with easy to clean surfaces, so that a thorough cleaning and thereby maintaining a high hygienic standard becomes feasible and is easily obtainable.

### Description of the Invention

The invention provides this by a barrier according to claim 1.

By providing each post with members having a cross-section in the shape of a U or a V, it becomes possible to easily clean all surfaces of the posts in that there are no closed or semi-closed spaces, but all surfaces of the post are available. At the same time the U- or V-shaped cross-section of the posts provides very stiff members due to their moment of resistance so that a very rigid construction may be accomplished.

By also avoiding having closed or semi-closed spaces and no horizontal surfaces present, it is guaranteed that no water and thereby residue which may give rise to bacteria growth and thereby polluting the food stuffs is avoided in that the construction as such is created in a manner whereby it is self-draining.

In a further advantageous embodiment of the invention two adjacent panels are angled in relation to each other by means provided on the post which the suspension means of both panels are provided on, wherein at least the suspension means of one panel is either in the shape of open hinges, where the hinges rotate about an axis parallel to the post, or is in the shape of preformed modular brackets.

In order to surround or semi-surround for example a robot it is necessary to be able to create a barrier which may follow the outer periphery of the working area which is allowed for such a robot. For these purposes it is desirable to be able to angle the panels making up the barrier in relation to each other so that a barrier enclosing the minimum required space and thereby allowing more free working space for the manual workers in the same working area is provided. By providing the relative angulation between two adjacent barrier panels in the shape of hinges and in particular open hinges it is possible to angle the panels in any desired angle relative to each other.

The open hinges furthermore make it possible to flush out contaminants which may become lodged in the hinge construction so that also regarding this detail improved hygienic conditions may be the result.

The open hinge may for example be provided by allowing the cylinder in which a hinge pin is lodged to be made from a wire mass so that the physical stresses arising from the barrier construction is assimilated by the netting whereby a relatively stable hinge construction may be provided in that the hinge cylinder may have an extent providing a good support for the hinge pin and at the same time the cylinder may be relatively open whereby thorough cleaning becomes possible.

The preformed modular brackets have a shape such that two ends of the brackets are angled relative to each other at a predetermined angle, for example 15, 25, 35 or any other desired angle. In this manner the barrier may be constructed in a well defined and predefined manner.

In a further advantageous embodiment of the invention each post is provided with a foot plate having a plane substantially perpendicular to the longitudinal direction of the post, and where said foot plate is provided with means for attaching said post to a base. The base may for example be the working floor and the means for attaching the post to the working floor may for example be apertures provided in the foot plate so that bolt connection and the like may be used in order to fasten the footplate to the floor. Bolt connections, however, may give rise to accumulation of debris which in turn may give rise to bacteria growth and contamination and care should therefore be paid to providing bolts which are substantially flush with the foot plate, or which are provided with a design that makes them easy to clean. The foot plate may be attached to the post, for example by welding, and also here the weld should be carried out in such a manner that the weld itself is free of cavities, folds and the like. This may for example be achieved by grinding the welds in order to render them substantially free of cavities and at the same time provide smooth surfaces from which the cleaning water and other liquids may easily drain.

In an alternative embodiment of the invention, the foot plate is in the shape of three or more flanges, bent outwards from the post. The flanges are provided with holes such that a bolt or other fastening member may be passed through said hole and into the floor construction. Between each bent flange a free space between the lowest point on the flange and the post is provided, such that it is possible to flush underneath the post as well when cleaning.

When erecting the barrier, the invention in a further embodiment foresees that the bottom of the post is elevated from the floor and carried by the bolts by arranging support nuts under the flanges. The nuts also foresee easy height adjustment and thereby alignment of the barrier.

In a further advantageous embodiment of the invention a door member is provided where said door member comprises a barrier panel suspended in a frame, where said barrier frame is connected to a door frame by hinges, comprising two spaced apart posts, which posts are connected by a door lintel, where said door lintel has a U or V shape such that the open end is turned downwards.

The provision of a dedicated door member provides for a very stable and reliable door so that easy access may be gained to the machine enclosed by the barrier according to the present invention. By furthermore creating the door frame according to the principles of the invention, i.e. so that no horizontal surfaces are provided, it is assured that all cleaning liquids will easily drain away from the door frame so that the door frame itself will not give rise to contamination. The door frame members comprises two standard posts and a special door lintel element, such that a door may be provided substantially in any position in the barrier, may be moved or refitted as desired.

In this connection it is particularly the door lintel which is made from a for example V-shaped profile so that the sharp edge of the V is turned upwards, whereby liquids easily may drain both from the outside and the inside of said door lintel. Again, the resistance moment of the U- or V-shaped profiles provides the stiffness necessary in order to have a very stable and stiff barrier construction. The hinges used in the connections connected by hinges between the barrier frame and the door frame may be of the type described above in order to render them easy to clean as well.

In a still further advantageous embodiment of the invention each barrier panel is made from steel netting, welded to a substantially solid edge member, where the welded connection is substantially flush, such that the netting appears to be integral with the edge member.

In the art it is well-known to provide panels for a variety of purposes where the netting is larger than the inner periphery of a frame member so that an overlap is provided between the netting and the frame. The netting may thereafter be welded to the frame, usually by a welding robot, so that a stable and rigid connection is created by the netting and the frame. This provides for a very rationalized method of manufacture and for a number of uses and purposes it provides a satisfactory result. From a hygienic point of view this is, however, not true in that the steel mesh made from steel rods usually having a diameter of 2-3 mm, which when welded to the frame creates nicks between this thin steel rod and the frame. In these nicks it is very difficult to clean, and as the netting usually has a steel rod every 20 or 30 mm, and each steel rod creates two nicks, the result is a large number of places which are difficult to clean. It is therefore advantageous to weld the steel netting to the frame in such a manner that these nicks are avoided and where it appears that the steel netting is integral with the edge member.

In a still further advantageous embodiment the height of the barrier in the mounted situation, i.e. when suspended between the posts, may be from may be from 50 cm to 300 cm, and where the width of each panel may be from 30 cm to 150 cm. This in turn requires that posts of different lengths be provided, and that the pre-manufactured barrier panels may be manufactured according to the specific measurements.

This in turn provides a further advantageous embodiment of the invention where the barriers are made of modules, where each module may have measurements as a whole number of times a base module, where the base module may be for example 15 cm. This makes it possible to pre-manufacture a large number of standard sizes so that barriers according to the local conditions may be erected very quickly and by unskilled labour, in that it is simply a matter of assembling the panels making up the barrier construction. The barrier may be assembled before being fastened to the floor in that the angulation between relative barrier panels may be chosen freely due to the provision of hinges which at the same time make it possible to create a self-standing barrier without it being fastened to the floor. In this manner it is possible to erect the entire barrier surrounding a robot or the like and after having constructed the entire barrier, fasten the post at the appropriate places in the floor, which ensures the correct positioning of the floors so that the barrier panels are not exposed to undue stresses which could twist or buckle the panels. Any size of the base module may naturally be chosen, but practice has shown that multiples of 15 cm provide for a wide variety of panel sizes which make it possible to create barriers enclosing substantially all types of machinery.

Above the panels have been described as being made from a steel netting being attached to en edge member, but the barrier panels may also in a further advantageous embodiment of the invention be made from acryl and more preferred transparent acryl. By making the panels from a plastic material spray from the working process being carried out inside the barrier may be limited and contained within the barrier so that spreading of spray may be avoided.

### Description of the Drawing

Fig. 1 example of prior art barrier;
Fig. 2 detail of prior art barrier;
Fig. 3 detail of prior art panel;
Fig. 4 example of barrier construction according to the invention;
Fig. 5 as fig 4, seen in a plane view;
Fig. 6 illustrates a second embodiment of a foot plate arrangement;
Fig. 7 illustrates a modular assembly bracket;
Fig. 8 and 9 illustrates assembly details.

### Detailed description of an embodiment

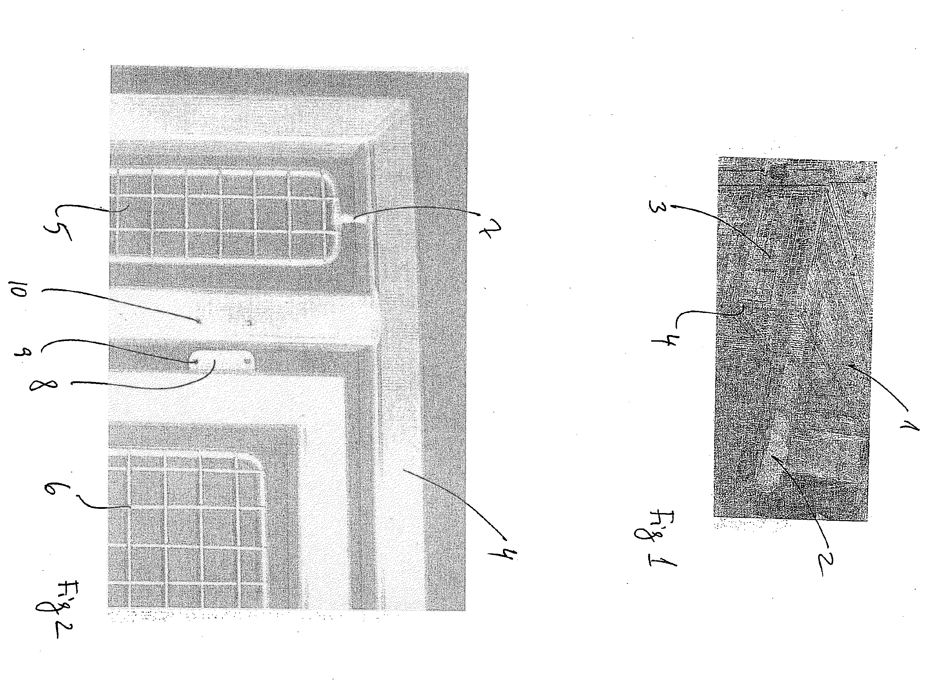

In figure 1 is illustrated a machinery (conveyor belt) encapsulated in a wire cage 1. A conveyor belt 2 extends from the wire cage 1. The wire cage 1 comprises a number of wire mesh panels 3 which are attached to a load carrying structure 4. The load carrying structure is in this example made from tubes having a quadratic cross-section which tubes are welded together in order to create the different angles etc.

In figure 2 is illustrated typical details from a prior art barrier, where tubes having a square cross-section are used in order to give the barrier the constructional strength necessary. Barrier panels 5, 6 are attached to the carrying structure 4 by welding 7 or by flange plates 8 being fastened to the carrying structure 4 by screws or bolts through the holes 9 which are superposed the hole 10 in the carrying structure. In this manner the overlap between the flanges 8 and the carrying structure 4 creates places where it becomes extremely difficult to clean the structure which may give rise to contamination if such barriers were used in the fresh food industry.

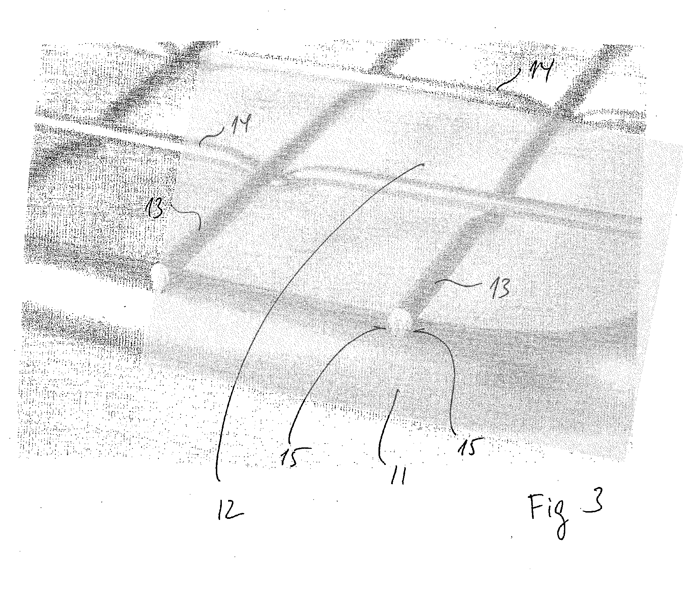

Turning to figure 3 a detail of a panel 5, 6 is illustrated. The panel comprises an edge member 11 which edge member 11 frames a wire netting 12. The wire net 12 comprises a number of thin steel rods 13, 14 which steel rods typically have a diameter of a few millimetres. The steel rods 13 are welded onto the edge member 13 whereby a large number of nicks 15 are created at the interface between the steel rod 13 and the edge member 11. Due to the very large number of nicks 15 a high probability of unsatisfactory cleaning when cleaned by traditional cleaning measures arises, so that the probability of contamination increases if such barrier panels are used in the fresh food production industry.

Therefore, the invention foresees a barrier panel where the nicks 15 are avoided by creating welds between the steel rods 13 and the edge member 11 where the steel rod 13 appears to be integral with the edge member 11, so that the nicks are avoided.

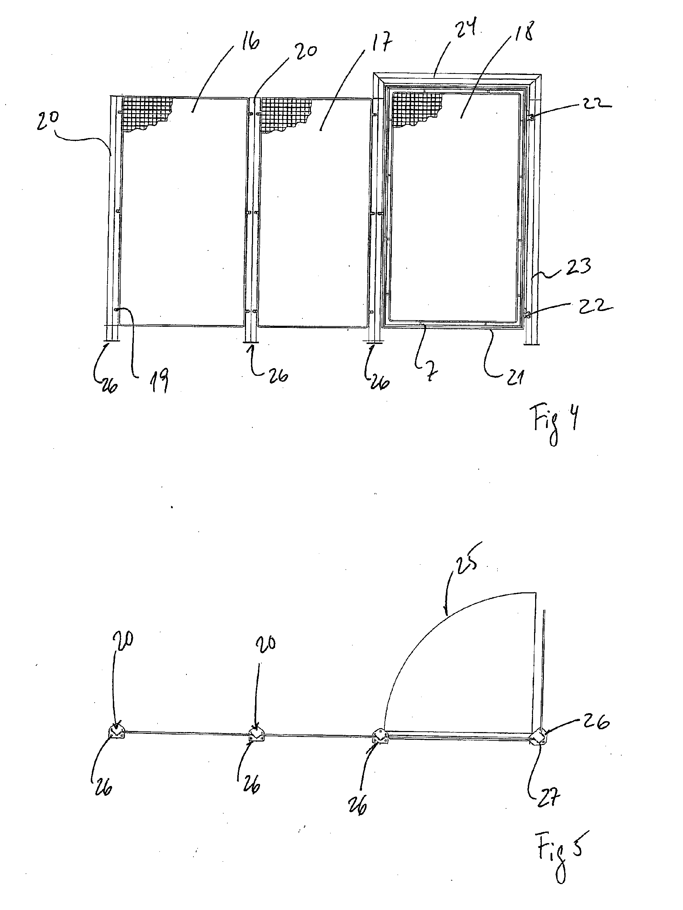

Turning to figure 4 an example of a barrier construction according to the present invention is illustrated. The barrier comprises a number of barrier panels 16, 17 and 18 which, as illustrated are made from a steel wire mesh. The steel wire mesh is surrounded by an edge member, for example being a solid member as illustrated with reference to the prior art illustrated in figure 3 and suspension means 19 are provided between the barrier panels 16, 17 and 18 and the posts 20. The suspension means 19 may be in the shape of open hinges where it is desirable to be able to angle two adjacent barrier panels or may simply be flanged and hooked onto the posts 20.

The barrier panel 18 is part of a door where the door frame 21 may be opened as illustrated with respect to figure 5. The barrier panel 18 is attached to the door frame 21 by attachment means 7 as known from the prior art, see figure 2. Between the door frame 21 and the post structure 23 creating the door opening, two open hinges 22 are provided so that the door frame 21, as indicated in figure 5 with reference to 25 may be opened and thereby give access to the enclosed machinery. The door lintel 24 is made from a member having a V-shaped cross-section where the tip of the V is facing upwards so that no horizontal surfaces are present. This provides for self-draining constructions which further improve the hygienic quality of cleaning of these types of barriers.

Turning to figure 5 the panel structure according to figure 4 is seen from above. The post 20 has a V-shape so that no hidden or enclosed spaces are provided but easy cleaning may be accomplished from both sides to all surfaces of the construction. The posts are placed on foot plates 26 which foot plates are provided with holes so that they may be bolted or otherwise fastened to a floor. In the illustrated embodiment with respect to figure 5 a corner post 27 is illustrated having a U-shaped cross-section. Particularly where right angled corners are desirable the post may be given a U-shaped cross-section so that a relative angle between the flange of the post and the barrier panel may be maintained at substantially the same relative angle as the barrier panel's angle to the post on straight sections.

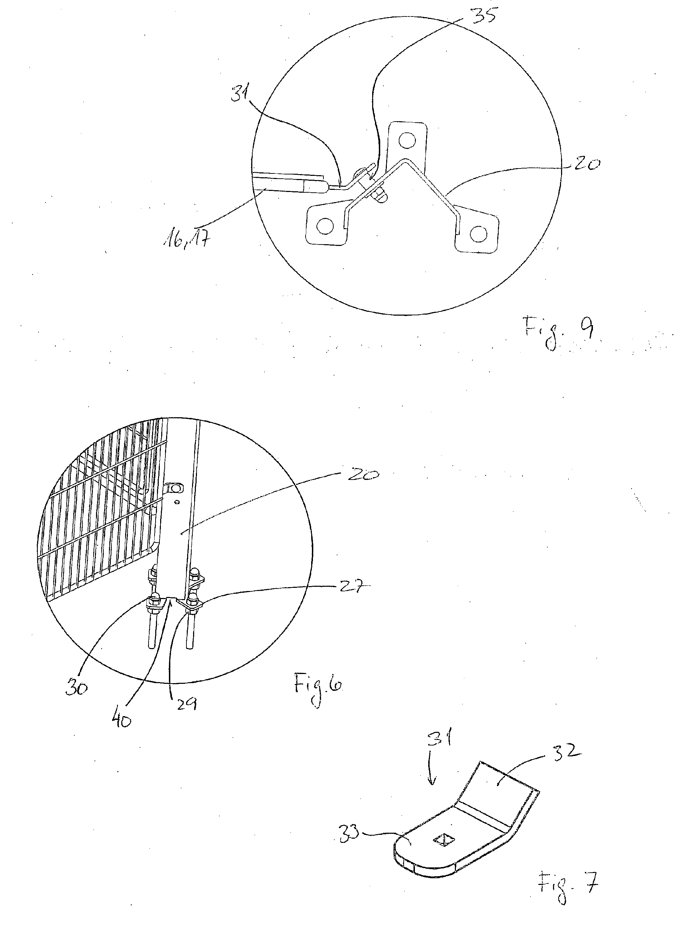

In fig. 6 is illustrated a second embodiment of a footplate. Here the lowest section of the post 20, is provided with bent out flanges 27 such that bolts 28 may be passed through the flanges 27. In this particular embodiment the posts 20 are elevated above the floor surface, and the post 20 is carried by nuts 29, which may easily be height adjusted such that the barrier may easily be aligned at the right level. The nuts 30 which fixate the barrier panel are provided with domes such that contamination may not become lodged in the otherwise exposed thread.

Between the flanges 27 the post material is recessed 40, in order to allow flushing under the foot of the post, when the post for example is not elevated above the mounting surface.

In fig. 7 is illustrated an example of a modular bracket 31, adapted to connect two adjacent barrier panels at a predetermined angle, corresponding to the relative angle between the two ends 32 and 33 of the bracket. The end 32 may be welded onto a first panel, whereas the second end 33, may be bolted on. The square hole provides the possibility to use bolts with a round and substantially flush bolt head, where the resistance against the tightening torque is provided by part of the bolt body being square and fitting inside the square hole.

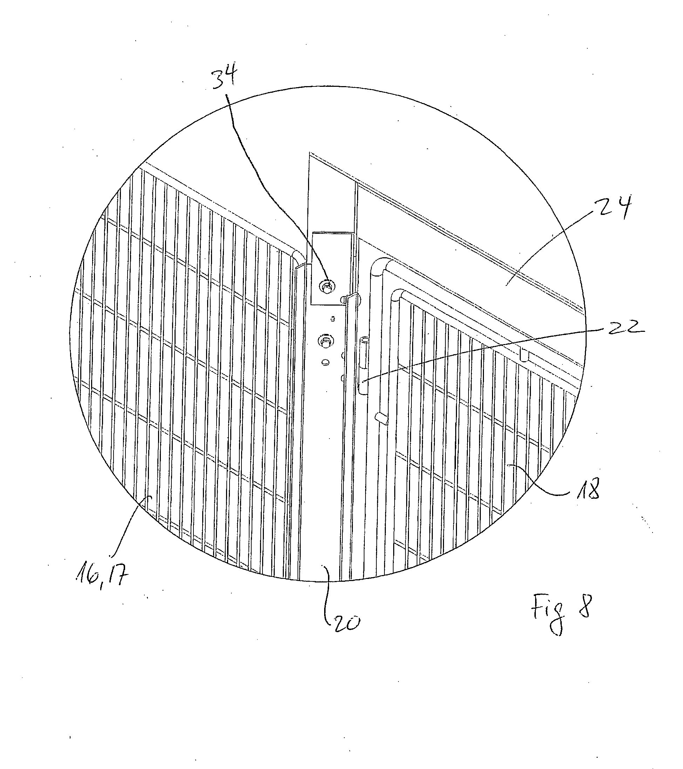

Turning to fig 8, an assembly detail between a standard modular post 20 and a door lintel 24 is illustrated. The door is attached to the door frame, in the shape of a post 20 by a hinge 22, and a simple bolt connection 34 connects the lintel 24 to the post 20.

A further assembly detail is illustrated in fig. 9, where a distance piece 35, for example in the shape of a short cylinder is interposed between the assembly bracket and the post 20, where the distance piece 35 is fitted around the bolt, connecting the panel 16,17 with the post 20.

Although only barrier panels of the wire mesh type have been illustrated, the barrier panels may also be made from solid panels such as for example plastic panels and in particular acrylic or polycarbonate and in particular transparent panels are desirable for these purposes. The wire mesh may also be of a plastic construction where the entire barrier panel 16, 17 may be moulded as an integrated unit and fastened according to the principles of the invention to the outstanding posts 20.

Although a specific embodiment of the invention has been explained with respect to the prior art, it is contemplated that variations and alterations of the invention may be performed without departing from the scope of protection as afforded by the appended claims.

## Claims

1. Barrier, in particular a safety barrier for machinery, such as robots working under high hygienic requirements, for example in the fresh food industry, where said barrier comprises:
- a plurality of posts (20)
- a plurality of barrier panels (16,17,18), where each barrier panel (16,17,18) is suspended between two posts
- suspension means (19)
**characterized in that** each barrier panel (16,17,18) is made from steel netting (12), welded to a substantially solid round edge member (11), where the welded connection between the netting (12) and the edge member (11) is substantially flush, such that the netting (12) appears to be integral with the edge member (11) or where the barrier panels (16,17,18) are made from acryl, and more preferred transparent acryl, and that each post (20) has a U- or V-shaped cross-section and that in the mounted position the barrier has no closed, or semi-closed spaces, and that no horizontal surfaces are present.

2. Barrier according to claim 1 wherein two adjacent panels (16,17,18) are angled in relation to each other by means (22) provided on the post (20) which the suspension means (19) of both panels are provided on, wherein at least the suspension means (19) of one panel is in the shape of open hinges (22), where the hinges (22) rotate about an axis parallel to the post (20).

3. Barrier according to claim 1, wherein each post (20) is provided with a foot plate (26) having a plane substantially perpendicular to the longitudinal direction of the post (20), and where said foot plate (26) is provided with means for attaching said post to a base.

4. Barrier according to claim 1 wherein a door member (18) is provided, where said door member (18) comprises a barrier panel suspended in a frame (21), where said barrier frame is connected by hinges (22) to a door frame (23), comprising two spaced apart posts, which posts are connected by a door lintel(24), where said door lintel (24) has a U- or V-shape such that the open end is turned downwards.

5. Barrier according to claim 1 wherein the height of the barrier in the mounted situation may be from 50 cm to 300 cm, and where the width of each panel may be from 30 cm to 150 cm.

6. Barrier according to claim 1 or 5 wherein the barriers are made as modules, where each module may have measurements as a whole number of times a base module, where the base module may be for example 15 cm.

## Patentansprüche

1. Barriere, insbesondere eine Sicherheitsbarriere für Maschinen, wie zum Beispiel unter hohen Hygieneanforderungen, zum Beispiel in der Frischkostindustrie, arbeitende Roboter, wobei die Barriere Folgendes umfasst:
- mehrere Stützen (20)
- mehrere Barrieretafeln (16, 17, 18), wobei jede Barrieretafel (16, 17, 18) zwischen zwei Stützen aufgehängt ist,
- Aufhängungsmittel (19),
**dadurch gekennzeichnet, dass** jede Barrieretafel (16, 17, 18) aus einem mit einem im Wesentlichen massiven runden Randglied (11) verschweißten Stahlnetz (12) hergestellt ist, wobei die geschweißte Verbindung zwischen dem Netz (12) und dem Randglied (11) im Wesentlichen bündig ist, so dass das Netz (12) integral mit dem Randglied (11) erscheint, oder wobei die Barrieretafeln (16, 17, 18) aus Acryl und vorzugsweise transparentem Acryl, hergestellt sind, und dass jede Stütze (20) einen U-oder V-förmigen Querschnitt aufweist und dass die Barriere in der angebrachten Position keine geschlossenen oder halbgeschlossenen Räume hat und dass keine horizontalen Flächen vorliegen.

2. Barriere nach Anspruch 1, wobei zwei benachbarte Tafeln (16, 17, 18) bezüglich einander durch Mittel (22) an der Stütze (20), an der die Aufhängungsglieder (90) beider Tafeln vorgesehen sind, abgewinkelt sind, wobei mindestens das Aufhängungsglied (90) einer Tafel in Form von offenen Scharnieren (24 20) vorliegt, wobei sich die Scharniere (22) um eine parallel zur Stütze (20) verlaufende Achse drehen.

3. Barriere nach Anspruch 1, wobei jede Stütze (20) mit einer Fußplatte (26) versehen ist, die eine im Wesentlichen senkrecht zur Längsrichtung der Stütze (20) verlaufende Ebene aufweist, und wobei die Fußplatte (46) mit Mitteln zur Befestigung der Stütze an einer Basis versehen ist.

4. Barriere nach Anspruch 1, wobei ein Türglied (18) vorgesehen ist, wobei das Türglied (18) eine in einem Rahmen (21) aufgehängte Barrieretafel umfasst, wobei der Barriererahmen durch Scharniere (22) mit einem Türrahmen (23) verbunden ist, mit zwei beabstandeten Stützen, wobei die Stützen durch einen Türsturz (24) miteinander verbunden sind, wobei der Türsturz (94) eine U- oder V-Form aufweist, derart, dass das offene Ende nach unten gedreht ist.

5. Barriere nach Anspruch 1, wobei die Höhe der Barriere in der angebrachten Situation von 50 cm bis 300 cm betragen kann, und wobei die Breite jeder Tafel von 30 cm bis 150 cm betragen kann.

6. Barriere nach Anspruch 1 oder 5, wobei die Barrieren als Module hergestellt sind, wobei jedes Modul Abmessungen aufweisen kann, die ein ganzzahliges Vielfaches eines Basismoduls betragen, wobei das Basismodul zum Beispiel 15 cm aufweisen kann.

## Revendications

1. Barrière, en particulier barrière de sécurité pour des machines, telles que des robots travaillant sous des exigences hygiéniques élevées, par exemple dans l'industrie des produits alimentaires frais, dans laquelle ladite barrière comprend:
- une pluralité de montants (20);
- une pluralité de panneaux de barrière (16, 17, 18), dans laquelle chaque panneau de barrière (16, 17, 18) est suspendu entre deux montants; et
- des moyens de suspension (19),
**caractérisée en ce que** chaque panneau de barrière (16, 17, 18) est constitué d'un treillis d'acier (12), soudé à un élément de bord arrondi sensiblement plein (11), dans laquelle la connexion soudée entre le treillis (12) et l'élément de bord (11) est sensiblement à fleur, de telle sorte que le treillis (12) semble intégré avec l'élément de bord (11) ou dans laquelle les panneaux de barrière (16, 17, 18) sont constitués d'acrylique, et mieux encore d'acrylique transparent, et **en ce que** chaque montant (20) présente une section transversale en forme de U ou de V, et **en ce que**, à l'état monté, la barrière ne présente aucun espace fermé ou semi-fermé, et **en ce qu'**aucune surface horizontale ne soit présente.

2. Barrière selon la revendication 1, dans laquelle deux panneaux adjacents (16, 17, 18) sont inclinés l'un par rapport à l'autre à l'aide de moyens (22) prévus sur le montant (20) sur lequel les moyens de suspension (19) des deux panneaux sont prévus, dans laquelle les moyens de suspension (19) d'un panneau se présentent sous la forme de charnières ouvertes (22), dans laquelle les charnières (22) tournent autour d'un axe parallèle au montant (20).

3. Barrière selon la revendication 1, dans laquelle chaque montant (20) est pourvu d'une plaque d'appui (16) présentant un plan sensiblement perpendiculaire à la direction longitudinale du montant (20), et dans laquelle ladite plaque d'appui (26) est pourvue de moyens pour attacher ledit montant à une base.

4. Barrière selon la revendication 1, dans laquelle un élément de porte (18) est prévu, dans laquelle ledit élément de porte (18) comprend un panneau de barrière suspendu dans un cadre (21), dans laquelle ledit cadre de barrière est connecté par des charnières (22) à un cadre de porte (23), comprenant deux montants espacés l'un de l'autre, lesdits montants étant connectés par un linteau de porte (24), dans laquelle ledit linteau de porte (24) présente une forme de U ou de V de telle sorte que l'extrémité ouverte soit orientée vers le bas.

5. Barrière selon la revendication 1, dans laquelle la hauteur de la barrière à l'état monté peut être comprise entre 50 cm et 300 cm, et dans laquelle la largeur de chaque panneau peut être comprise entre 30 cm et 150 cm.

6. Barrière selon la revendication 1 ou 5, dans laquelle les barrières sont constituées comme des modules, dans laquelle chaque module peut présenter des dimensions correspondant à un nombre entier de fois un module de base, dans laquelle le module de base peut être par exemple de 15 cm.
